## Europäisches Patentamt

(19) **European Patent Office**

**Office européen des brevets**

(11) Numéro de publication: **0 032 325 B1**

(12) **FASCICULE DE BREVET EUROPEEN**

(45) Date de publication du fascicule du brevet:
**10.07.85**

(21) Numéro de dépôt: **80401520.4**

(22) Date de dépôt: **27.10.80**

(51) Int. Cl.⁴: **H 04 L 27/20**

(54) **Modulations binaires à déplacement de phase et modulateurs.**

(30) Priorité: **31.10.79 FR 7927519**

(43) Date de publication de la demande:
**22.07.81 Bulletin 81/29**

(45) Mention de la délivrance du brevet:
**10.07.85 Bulletin 85/28**

(84) Etats contractants désignés:
**DE GB IT**

(56) Documents cités:
**DE - A - 2 127 517**
**FR - A - 2 394 921**
**GB - A - 1 333 951**
**US - A - 3 750 051**

**IBM TECHNICAL DISCLOSURE BULLETIN, vol. 21, no. 1, juin 1978, New York US, GIANNINI et al.: "Pulsed offset QPSK Modulator", pages 123-124**

(73) Titulaire: **Brossard, Pierre Claude, 9, rue des Fleurs Montigny-le-Bretonneux, F-78190 Trappes (FR)**
Titulaire: **Duponteil, Daniel, 55 Rue Sadi Carnot, F-92170 Vanves (FR)**

(72) Inventeur: **Brossard, Pierre Claude, 9, rue des Fleurs Montigny-le-Bretonneux, F-78190 Trappes (FR)**
Inventeur: **Duponteil, Daniel, 55 Rue Sadi Carnot, F-92170 Vanves (FR)**

(74) Mandataire: **Le Guen, Louis François, Cabinet Louis Le Guen 1, avenue Edouard VII B.P. 91, F-35802 Dinard Cédex (FR)**

BUNDESDRUCKEREI BERLIN

## Description

La présente invention concerne des modulations binaires à déplacement de phase à $2^N$ états, avec N supérieur à 1. Elle concerne également des modulateurs utilisables pour obtenir ces modulations.

La modulation binaire par déplacement de phase à deux ($2^1$) états est bien connue sous la deénomination MDP2. Dans cette modulation, on associe deux états de phase de la porteuse, ces deux états de phase différant de $\pi$, aux états binaires du message numérique à transmettre. Dans le but d'utiliser une démodulation différentielle, on transmet le symbole binaire 1 par un saut de phase de $\pi$ et on transmet le symbole binaire 0 par saut de phase nul. Si T est la durée d'un symbole binaire, 1/T est le débit numérique et la porteuse modulée MDP2 a pour spectre:

$$S_{MDP2}(f) = T \frac{\sin(\pi fT)^2}{\pi fT} \tag{1}$$

Quand on transmet un signal MDP2, il est d'usage de limiter sa bande de fréquence, autour de la fréquence porteuse $f_p$, à une valeur $\frac{1}{T}(1 + \alpha)$, où $\alpha$ prend une valeur comprise entre 0 et 0,3.

L'enveloppe du signal MDP2, qui était constante avant le filtrage, présente de grandes fluctuations après le filtrage. En particulier, chaque saut de phase de $\pi$ se traduit par un passage par 0 de l'enveloppe. Cette particularité entraîne, pour le signal filtré, une grande sensibilité aux non-linéarités du canal de transmission, dues essentiellement aux amplificateurs non-linéaires, tels que par exemple des tubes à ondes progressives dans les liaisons spatiales.

Toutefois, il faut reconnaître que la modulation MDP2 est très séduisante car elle permet une démodulation différentielle réalisée au moyen d'un démodulateur très simple.

Un objet de la présente invention consiste à utiliser une modulation de symboles binaires qui soit moins sensible aux non-linéarités du canal de transmission, tout en permettant de conserver, les mêmes performances théoriques en démodulation différentielle et la même simplicité de réalisation du démodulateur différentiel.

Dans le brevet US-A-3 750 051, on mentionne une modulation binaire à déplacement de phase à quatre états qui différent de $\pi/2$, dans laquelle le symbole binaire 1 est transmis par un saut de phase de $+ \pi/2$ et le symbole binaire 0 est transmis par un saut de phase de $- \pi/2$. En fait, dans le brevet US-A-3 750 051, le résultat de cette modulation n'est pas utilisé tel quel, mais combiné avec une autre modulation. Cette modulation présente les avantages mentionnés ci-dessus et, dans la suite, on la désignera par MDP2 − 4.

Un autre objet de l'invention consiste à prévoir un modulateur pour modulation MDP2 − 4.

Un autre objet de l'invention consiste à prévoir une modulation à huit états directement dérivée de la modulation MDP2 − 4.

Ainsi, suivant une autre caractéristique de l'invention, il est prévu une modulation binaire à déplacement de phase à huit états qui différent de $\pi/4$, dans laquelle le symbole binaire 1 est transmis par deux sauts successifs de $+ \pi/4$ et le symbole binaire 0 est transmis par deux sauts successifs de $- \pi/4$, les sauts successifs de $+$ ou $- \pi/4$ étant effectués à un rythme double du débit numérique du signal binaire modulant. Dans la suite on désignera cette modulation par MDP2 − 8.

Un autre objet de l'invention consiste encore à prévoir un modulateur pour la modulation MDP2 − 8.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels:

les Figs. 1A à 1F montrent les symboles des circuits logiques utilisés dans les schémas des modulateurs suivant l'invention,

la Fig. 2 est le schéma d'un démodulateur différentiel connu,

la Fig. 3 représente trois spectres de signaux à modulation MDP2 avant filtrage, après filtrage, puis après passage dans un amplificateur saturé,

la Fig. 4 représente trois spectres de signaux à modulation MDP2 − 4, dans les mêmes conditions de traitement qu'à la Fig. 3,

la Fig. 5 est le schéma d'un modulateur pour modulation MDP2 − 4,

les Figs. 6A à 6E sont des formes de signaux en divers points du modulateur de la Fig. 5,

la Fig. 7 représente trois spectres de signaux à modulation MDP2 − 8, dans les mêmes conditions de traitement qu'à la Fig. 3,

la Fig. 8 est le schéma d'un modulateur pour modulation MDP2 − 8, et

les Figs. 9A à 9I sont des formes d'onde de signaux délivrés par le modulateur de la Fig. 8.

Avant de procéder à description des exemples de modulateurs engendrant les modulations suivant l'invention, on va définir les circuits logiques qui sont utilisés dans les schémas de ces modulateurs.

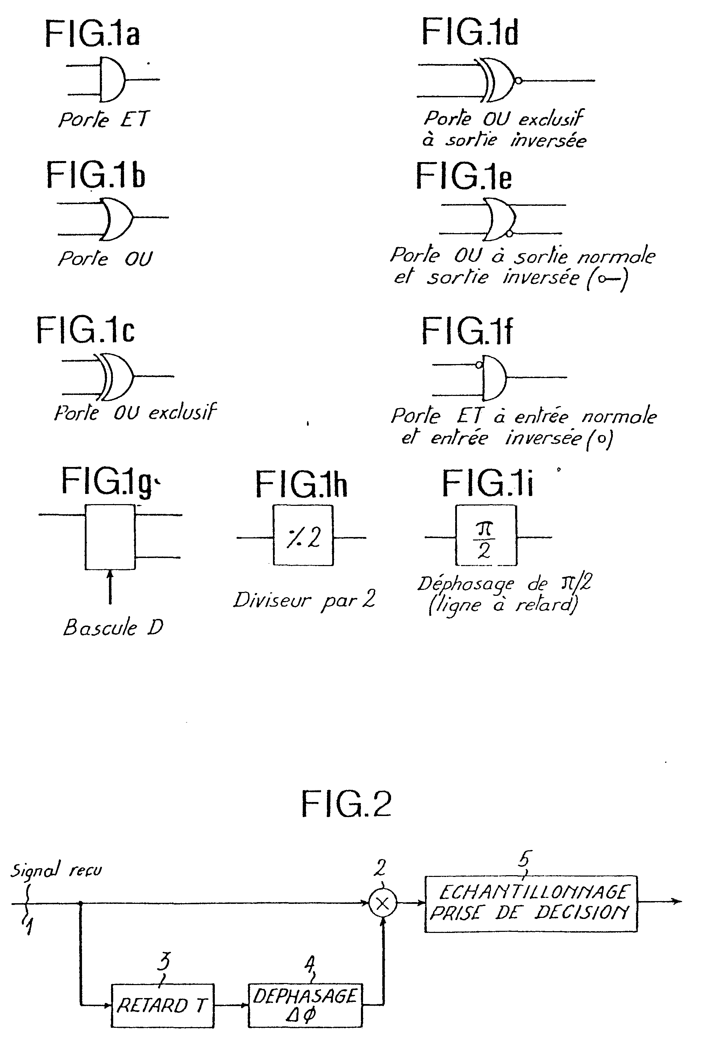

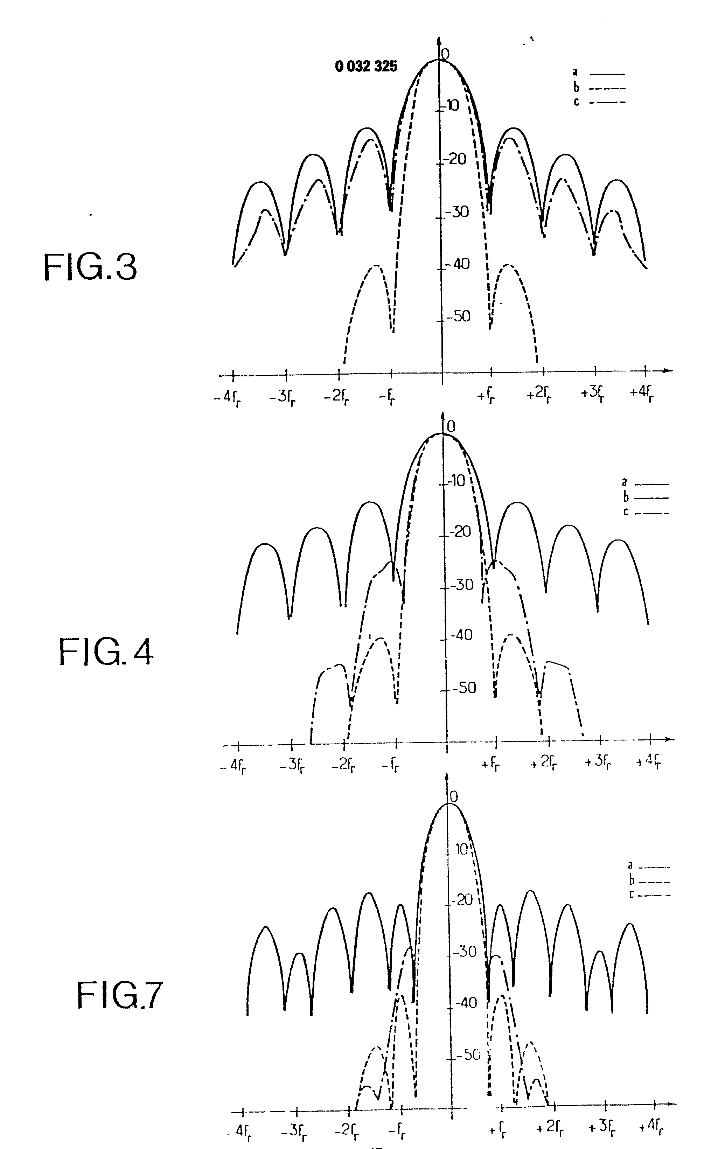

A la Fig 1A, on a représenté une porte ET; à la Fig. 1B une porte OU; à la Fig. 1C, une porte OU exclusif classique; à la Fig. 1D, une porte OU exclusif dont la sortie est inversée par rapport à celle de la Fig. 1C, ce qui est indiqué par un petit rond à l'origine du fil de sortie de la porte de la Fig. 1D; à la Fig. 1E, une porte OU comportant une sortie normale, analogue à celle de la porte de la Fig. 1C, la représentation de cette sortie ne comportant pas de rond à l'origine du fil, et une sortie inversée dont la représentation comporte un rond à l'origine du fil correspondant; à la Fig. 1F, une porte ET comportant une entrée normale, sans rond au bout du fil correspondant, et une entrée inversée, avec rond au bout du fil correspondant; à la Fig. 1g une bascule D à une entrée de données et deux sorties Q et Q, plus une entrée de validation indiquée par une flèche; à la Fig. 1H, un diviseur numérique par deux; et, à la Fig. 1I, un circuit à retard dont le retard se traduit par un déphasage dont la valeur est induquée à l'intérieur du bloc.

A la Fig. 2, on a représenté un démodulateur différentiel classique qui comporte une entrée I à laquelle est appliqué le signal à démoduler et qui est reliée, d'une part, à une entrée d'un multiplicateur 2 et, d'autre part, à l'entrée d'un circuit à retard 3, apportant un retard T, dont la sortie est reliée d'un circuit déphaseur 4, apportant un déphasage $\Delta\Phi$, dont la sortie est reliée à l'autre entrée du multiplicateur 2. La sortie du multiplicateur 2 est reliée à l'entrée d'un circuit d'échantillonnage et de prise de décision classique 5. Quand on utilise la modulation MDP2, le déphasage $\Delta\Phi$ est pris égal à O. Le fonctionnement du démodulateur différentiel de la Fig. 2 est classique et ne sera pas décrit en détail.

A la Fig. 3, la courbe 3a représente le spectre de la porteuse modulée dans le cas d'une modulation MDP2, ce spectre correspondant à la formule (1). La courbe 3b représente le spectre d'un signal MDP2 ayant subi un filtrage dans un filtre de bande de largeur de bande 1,2 fr où fr = 1/T. La courbe 3c représente le spectre du signal MDP2 filtré, après qu'il soit passé dans un amplificateur saturé. On peut constater que la courbe 3c se rapproche de la courbe 3a, ce qui explique la vulnérabilité du signal MDP2 aux non-linéarités du canal de transmission.

Suivant l'invention, on prévoit une modulation dans laquelle la phase de la porteuse est décalée de $\pi/2$ à chaque symbole binaire transmis, un »1« étant transmis par un saut de phase de $+ \pi/2$ et un »0« étant transmis par un saut de phase de $- \pi/2$. Le spectre de ce signal MDP2−4 est le même que celui du signal MDP2. En effet, on a:

$$S_{MDP\,2-4}(f) = S_{MDP\,2}(f) = T \left[ \frac{\sin(\pi fT)}{\pi fT} \right]^2 . \qquad (2)$$

Le tableau I suivant permet de comparer les phases des porteuses en modulations MDP2 et MDP2−4, pour le même message binaire transmis.

Tableau I

| message binaire à transmettre | 1 | 0 | 1 | 1 | 1 | 0 | 0 | 1 |
|---|---|---|---|---|---|---|---|---|
| phase de la porteuse MDP2 | $\varphi_0$ | $\varphi_0$ | $\varphi_0+\pi$ | $\varphi_0$ | $\varphi_0+\pi$ | $\varphi_0+\pi$ | $\varphi_0+\pi$ | $\varphi_0$ |
| phase de la porteuse MDP2−4 | $\varphi_0$ | $\varphi_0-\frac{\pi}{2}$ | $\varphi_0$ | $\varphi_0+\frac{\pi}{2}$ | $\varphi_0+\pi$ | $\varphi_0+\frac{\pi}{2}$ | $\varphi_0$ | $\varphi_0+\frac{\pi}{2}$ |

Si l'on considère, à nouveau, le démodulateur de la Fig. 2, il apparaît que ce démodulateur différentiel fonctionne encore avec la modulation MDP2−4, à la condition de prévoir pour le déphaseur 4 un déphasage de $-\pi/2$.

Par ailleurs, la courbe 4a de la Fig. 4 représente le spectre du signal MDP2−4 avant filtrage, et ce spectre est, suivant la Fig. 2, le même que celui de la courbe 3a. La courbe 4b représente le spectre du signal filtré et elle est la même que la courbe 3b. La courbe 4c représente le spectre du signal MDP2−4 filtré, après passage dans un amplificateur saturé. On peut constater, en comparant les courbes 3c et 4c que, dans le dernier cas, une réduction très sensible du phénomène d'élargissement du spectre, non seulement sur les arches latérales, mais aussi sur l'arche principale. Cette propriété avantageuse tient au fait qu'il n'y a plus de saut de phase de $\pi$, c'est à dire de passage par O de l'enveloppe du signal transmis.

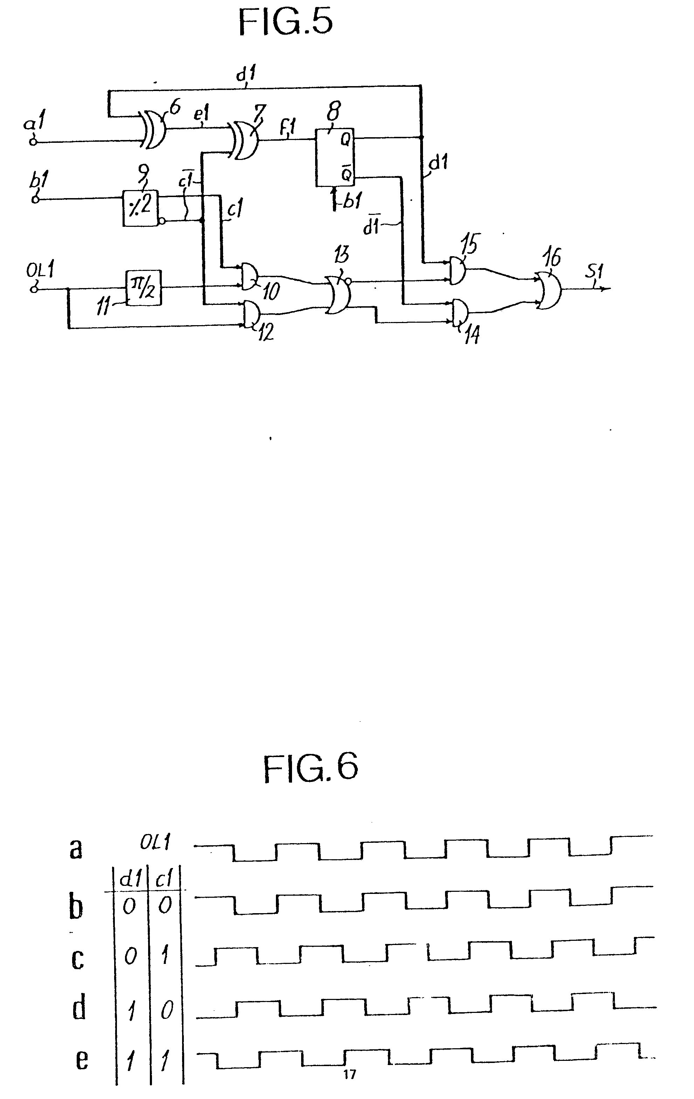

Le modulateur de la Fig. 5 comprend une entrée a1 à laquelle est appliqué le train des éléments binaires à transmettre et une entrée b1 qui délivre un signal d'horloge au rythme du train appliqué à a1. L'entrée a1 est reliée à une entrée d'une porte OU exclusif 6 dont la sortie est reliée à une entrée d'une porte OU exclusif 7 dont la sortie est reliée à l'entrée d'une bascule D 8. La sortie Q de la bascule 8 est reliée à la seconde entrée de la porte 6. L'entrée b1 est reliée à l'entrée d'un diviseur par deux 9 dont la sortie inversée est reliée à la seconde entrée de la porte 7. La sortie directe du diviseur 9 est reliée à une entrée d'une porte ET 10 dont la seconde entrée est reliée à la sortie d'un circuit à retard 11, apportant un retard de $+ \pi/2$, dont l'entrée est reliée à l'entrée OL1 à laquelle est appliqué un signal carré qui constitue la porteuse à moduler. L'entrée OL1 est encore reliée à une entrée d'une porte

3

ET 12 dont la seconde entrée est reliée à la sortie inverse du diviseur 9. Les sorties des portes ET 10 et 12 sont respectivement reliées aux deux entrées d'une porte OU 13 à sortie normale et sortie inversée, dont la sortie normale est reliée à une entrée d'une porte ET 14 et dont la sortie inversée est reliée à une entrée d'une porte ET 15. La seconde entrée de la porte ET 14 est reliée à la sortie Q̄ de la bascule 8 tandis que la seconde entrée de la porte ET 15 est reliée à la sortie Q de la même bascule. Les sorties des portes ET 14 et 15 sont respectivement reliées aux deux entrées d'une porte OU 16 dont la sortie délivre le signal modulé S1.

Dans le tableau II suivant, on a indiqué les valeurs binaires de signaux en différents points du circuit de la Fig. 5.

Tableau II

| | | | | | | | | | | | | | | |
|---|---|---|---|---|---|---|---|---|---|---|---|---|---|---|
| a1 | 0 | 1 | 1 | 0 | 0 | 0 | 1 | 0 | 0 | 1 | 1 | 1 | 0 | 1 |
| b1 | 1 | 1 | 1 | 1 | 1 | 1 | 1 | 1 | 1 | 1 | 1 | 1 | 1 | 1 |
| c1 | 1 | 0 | 1 | 0 | 1 | 0 | 1 | 0 | 1 | 0 | 1 | 0 | 1 | 0 |
| $e1 = a1 \odot d1$ | | 1 | 1 | 1 | 0 | 0 | 0 | 0 | 1 | 0 | 0 | 1 | 0 | 1 |
| $f1 = e1 \odot \overline{c1}$ | 0 | 0 | 1 | 0 | 0 | 1 | 0 | 1 | 1 | 1 | 0 | 0 | 0 | 0 |
| d1 | | 0 | 0 | 1 | 0 | 0 | 1 | 0 | 1 | 1 | 1 | 0 | 0 | 0 |
| phase des S1 | | 0 | $\pi/2$ | $\pi$ | $\pi/2$ | 0 | $3\pi/2$ | 0 | $3\pi/2$ | $\pi$ | $3\pi/2$ | 0 | $\pi/2$ | 0 |
| saut de phase | | | $+\dfrac{\pi}{2}$ | $+\dfrac{\pi}{2}$ | $-\dfrac{\pi}{2}$ | $-\dfrac{\pi}{2}$ | $-\dfrac{\pi}{2}$ | $+\dfrac{\pi}{2}$ | $-\dfrac{\pi}{2}$ | $-\dfrac{\pi}{2}$ | $+\dfrac{\pi}{2}$ | $+\dfrac{\pi}{2}$ | $+\dfrac{\pi}{2}$ | $-\dfrac{\pi}{2}$ |

où c1 est le signal de la sortie directe du diviseur 9, e1 est le signal de sortie de la porte 6, f1 le signal de sortie de la porte 7 et d1 le signal de sortie de la sortie Q de la bascule 8. Du tableau ci-dessus, on déduit immédiatement les valeurs des signaux binaires c1 et d1 mentionnés à la Fig. 5.

Les courbes de la Fig. 6 permettent également d'illustrer le fonctionnement du circuit de la Fig. 5. La Fig. 6A représente la forme d'onde du signal carré appliqué à l'entrée OL1, c'est à dire la porteuse non modulée. La Fig. 6B représente le signal à la sortie S1 quand on a c1 = 0 et d1 = 0; la Fig. 6C représente le signal à la sortie S1 quand on a la condition c1 = 1 et d1 = 0; la Fig. 6D représente le signal à la sortie S1 quand on a la condition c1 = 0 et d1 = 1; et la Fig. 6E représente le signal à la sortie S1 quand on a la condition c1 = 1 et d1 = 1. Il apparaît à l'examen des courbes des Figs. 6B à 6E que chacune se déduit de la précédente par un retard ou déphasage de $+\pi/2$. Il est facile en prenant chacune de ces conditions et le circuit de la Fig. 5 de vérifier ces courbes. Par ailleurs, on peut en déduire également la suite des phases de S1 qui est indiquée dans le tableau II quand on a choisit la séquence al qui est indiquée. Donc, on en déduit la séquence des sauts de phase indiquée dans le tableau II.

Il apparaît bient qu'un »1« binaire est transmis par un saut de phase de $+\pi/2$ et un »0« binaire par un saut de $-\pi/2$. Le signal modulé obtenu en S1 n'est pas une sinusoide modulée par déplacement de phase, mais un signal carré modulé par déplacement de phase. La différence entre ces deux signaux tient à l'existence, dans le second cas, d'harmoniques aux fréquences $3 f_p$, $5 f_p$, $7 f_p$, . . ., où $f_p$ est la fréquence porteuse. On pourrait monter un filtre derrière la sortie S1. En fait, le filtre habituellement utilisé à l'émission limite le spectre autour de la fréquence porteuse et, par la même occasion, élimine les harmoniques, si bien que le signal transmis est effectivement le signal classique, c'est à dire une sinusoïde modulée par déplacement de phase.

Dans une autre variante de l'invention, on prévoit une modulation dans laquelle la phase de la porteuse est décalée de $+\pi/2$ à chaque symbole binaire transmis, un »1« étant transmis par deux sauts successifs de $+\pi/4$ et un »0« étant transmis par deux sauts de phase successifs de $-\pi/4$. Le spectre de ce signal MDP2−8 répond à la formule suivante:

$$S_{MDP\,2-8}(f) = \frac{T}{8}\left[3\,\frac{\sin\,(3\,\pi fT/2)}{3\,\pi fT/2} + (2^{\frac{1}{2}}-1)\,\frac{\sin\,(\pi fT/2)}{\pi fT/2}\right]^2.$$

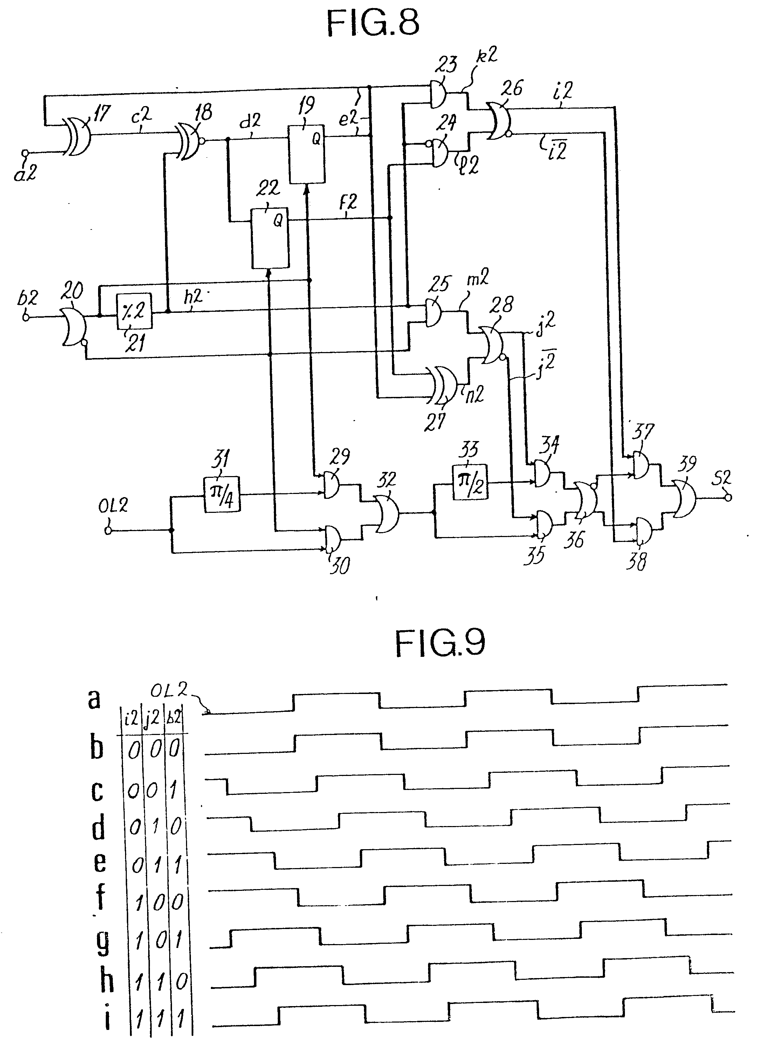

Comme le montre la courbe de la Fig. 7a, qui représente le spectre correspondant à la Fig. 3, l'arche centrale de ce spectre est plus étroite que celle de la courbe 3a relative au spectre du signal MDP2, et les arches latérales sont moins élevées. Il en résulte que le filtrage d'un signal présentant ce spectre est plus facile à exécuter. A noter encore que la modulation par sauts successifs est une version approchée de la modulation MSK (minimum shift keying), où les sauts de phase de $+\pi/2$ et $-\pi/2$ se font de manière continue, c'est à dire que le saut de phase n'est pas instantané, mais dure un symbole.

La courbe 7b représente le spectre d'un signal MDP2−8 filtré et la courbe 7c représente le spectre du signal MDP2−8 filtré, après passage dans un amplificateur'saturé. On peut constater en comparant la courbe 7c à la courbe 3c, ainsi qu'à la courbe 4c, une disparition pratiquement totale du phénomène d'élargissement du spectre. Cette propriété tient au fait qu'il n'y a plus de saut de phase de $\pi$ et que l'on approche la modulation MSK.

Le tableau III suivant permet de comparer les phases des porteuses en modulations MDP−2 et MDP2−8, pour le même message binaire transmis.

Tableau III

| message binaire à transmettre | 1 | 0 | 1 | 1 | 1 | 0 | 0 | 1 |
|---|---|---|---|---|---|---|---|---|
| phase de la porteuse MDP2 | $\varphi_0$ | $\varphi_0$ | $\varphi_0+\pi$ | $\varphi_0$ | $\varphi_0+\pi$ | $\varphi_0+\pi$ | $\varphi_0+\pi$ | $\varphi_0$ |
| phase de la porteuse MDP2−8 | $\varphi_0-\frac{\pi}{4}$ | $\varphi_0-\frac{\pi}{4}$ | $\varphi_0+\frac{\pi}{4}$ | $\varphi_0+\frac{\pi}{4}$ | $\varphi_0+\frac{\pi}{4}$ | $\varphi_0+\frac{\pi}{4}$ | $\varphi_0+\frac{\pi}{4}$ | |
| | $\varphi_0$ | $\varphi_0-\frac{\pi}{2}$ | $\varphi_0$ | $\varphi_0+\frac{\pi}{2}$ | $\varphi_0+\pi$ | $\varphi_0+\frac{\pi}{2}$ | $\varphi_0$ | $\varphi_0\frac{\pi}{2}$ |

Si l'on considère, à nouveau, le démodulateur de la Fig. 2, il apparaît que ce démodulateur différentiel fonctionne encore avec la modulation MDP2−8, à la condition de prévoir pour le déphaseur 4 un déphasage de $-\pi/2$.

Le modulateur de la Fig. 8 comprend une entrée à laquelle est appliqué le train des éléments binaires à transmettre et une entrée b2 qui délivre un signal d'horloge au rythme du train appliqué à a2. L'entrée a2 est reliée à une entrée d'une porte OU exclusif 17 dont la sortie est reliée à une entrée d'une porte OU exclusif à sortie inversée 18 dont la sortie est reliée à l'entrée d'une bascule D 19. La sortie Q de la bascule 19 est reliée à la seconde entrée de la porte 17. L'entrée b2 est reliée aux entrées d'une porte OU à sorties directe et inversée 20, dont la sortie directe est reliée, d'une part, à l'entrée d'un diviseur par deux 21 et, d'autre part, à l'entrée de validation de la bascule 19, et dont la sortie inversée est reliée à l'entrée de validation d'une bascule 22. La sortie du diviseur par deux 21 est reliée à la seconde entrée de la porte 18, à une entrée d'une porte ET 23, à l'entrée d'inversion d'une porte ET 24, et à une entrée d'une porte ET 25. La seconde entrée de la porte ET 23 est relliée à la sortie Q de la bascule 19. La seconde entrée de la porte ET 24 est reliée à la sortie Q de la bascule 22. La seconde entrée de la porte ET 25 est reliée à la sortie inversée de la porte OU 20. La sortie de la porte ET 23 et la sortie de la porte ET 24 sont respectivement reliées aux entrées d'une porte Ou 26 comportant une sortie directe et une sortie inversée. La sortie Q de la bascule 19 et la sortie Q de la bascule 22 sont respectivement reliées aux entrées d'une porte OU exclusif 27. La sortie de la porte ET 25 et la sortie de la porte 27 sont respectivement reliées aux entrées d'une porte OU 28 comportant une sortie directe et une sortie inversée.

La sortie directe de la porte OU 20 est reliée à une entrée d'une porte ET 29 tandis que la sortie inversée de 20 est relliée à une entrée d'une porte ET 30. La seconde entrée de 29 est reliée à la sortie d'un circuit à retard 31 dont l'entrée est relliée à l'entrée OL2 à laquelle est appliquè le signal carré qui constitue la porteuse non modulée. La seconde entrée de la porte 30 est directement reliée à l'entrée OL2. Le retard apporté par le circuit 31 correspond à une déphasage de $+\pi/4$ pour la porteuse appliquée à OL2. Les sorties des portes 29 et 30 sont respectivement reliées aux entrées d'une porte OU 32 dont la sortie est reliée, d'une part, à un circuit à retard 33 dont la sortie est reliée à une entrée d'une porte ET 34, et, d'autre part, à une entrée d'une porte Et 35. La seconde entrée de la porte 34 est reliée à la sortie directe de la porte OU 28 tandis que la seconde entrée de la porte 35 est reliée à la sortie inversée de 28. Les sorties des portes 34 et 35 sont respectivement reliées aux entrées d'une porte OU 36 comportant une sortie inversée qui est reliée à une entrée d'une porte ET 37 et une sortie directe qui est reliée à une entrée d'une porte ET 38. La seconde entrée de la porte 37 est reliée à la sortie directe de la porte OU 26 tandis que la seconde entrée de la porte 38 est reliée à la sortie inversée de 26. Les sorties des portes 37 et 38 sont respectivement reliées aux entrées d'une porte OU 39 dont la sortie est reliée à la sortie du modulateur S2 qui délivre le signal modulé.

Dans le tableau IV suivant, on a indiqué les valeurs binaires de signaux en diffèrents points du circuit de la Fig. 7.

Tableau IV

| | 1 | 2 | 3 | 4 | 5 | 6 | 7 | 8 | 9 | 10 | 11 | 12 | 13 | 14 | 15 | 16 | 17 | 18 |
|---|---|---|---|---|---|---|---|---|---|---|---|---|---|---|---|---|---|---|
| a2 | 1 | | 0 | 0 | 0 | 1 | 1 | 0 | 1 | | | | | | | | | |
| b2 | 1 | 0 | 1 | 0 | 1 | 0 | 1 | 0 | 1 | 0 | 1 | 0 | 1 | 0 | 1 | 0 | 1 | |
| h2 | 1 | 1 | 0 | 0 | 1 | 1 | 0 | 0 | 1 | 1 | 0 | 0 | 1 | 1 | 0 | 0 | 1 | |
| e2 | 1 | 1 | 0 | 0 | 1 | 1 | 1 | 1 | 0 | 0 | 1 | 1 | 1 | 1 | 1 | 1 | | |
| $c2 = a2 \odot e2$ | 0 | 0 | 0 | 0 | 1 | 1 | 1 | 1 | 1 | 1 | 0 | 0 | 1 | 1 | 0 | 0 | 1 | |
| $d2 = \overline{c2 \odot h2}$ | 0 | 0 | 1 | 1 | 1 | 1 | 0 | 0 | 1 | 1 | 1 | 1 | 1 | 1 | 1 | 1 | 1 | |
| f2 | 1 | 1 | 1 | 0 | 0 | 1 | 1 | 1 | 1 | 0 | 0 | 1 | 1 | 1 | 1 | 1 | 1 | |
| $k2 = e2.h2$ | 1 | 1 | 0 | 0 | 1 | 1 | 0 | 0 | 0 | 0 | 0 | 0 | 1 | 1 | 0 | 0 | | |
| $l2 = f2.\overline{h2}$ | 0 | 0 | 1 | 0 | 0 | 0 | 1 | 1 | 0 | 0 | 0 | 1 | 0 | 0 | 1 | 1 | 0 | |
| $i2 = f2 + k2$ | 1 | 1 | 1 | 0 | 1 | 1 | 1 | 1 | 0 | 0 | 0 | 1 | 1 | 1 | 1 | 1 | 1 | |
| $m2 = h2.\overline{b2}$ | 0 | 1 | 0 | 0 | 0 | 1 | 0 | 0 | 0 | 1 | 0 | 0 | 0 | 1 | 0 | 0 | 0 | |
| $n2 = e2 \odot f2$ | 0 | 0 | 1 | 0 | 1 | 0 | 0 | 0 | 1 | 0 | 1 | 0 | 0 | 0 | 0 | 0 | 0 | |
| $j2 = m2 + n2$ | 0 | 1 | 1 | 0 | 1 | 1 | 0 | 1 | 0 | 1 | 1 | 0 | 0 | 1 | 0 | 0 | 0 | |
| phase de S2 | $\frac{5\pi}{4}$ | $\frac{3\pi}{2}$ | $\frac{7\pi}{4}$ | $0$ | $\frac{7\pi}{4}$ | $\frac{3\pi}{2}$ | $\frac{5\pi}{4}$ | $\pi$ | $\frac{3\pi}{4}$ | $\frac{\pi}{2}$ | $\frac{3\pi}{4}$ | $\pi$ | $\frac{5\pi}{4}$ | $\frac{3\pi}{2}$ | $\frac{5\pi}{4}$ | $\pi$ | $\frac{5\pi}{4}$ | $\frac{3\pi}{2}$ |
| saut de phase | | | $+\frac{\pi}{4}$ | $+\frac{\pi}{4}$ | $-\frac{\pi}{4}$ | $-\frac{\pi}{4}$ | $-\frac{\pi}{4}$ | $-\frac{\pi}{4}$ | $-\frac{\pi}{4}$ | $-\frac{\pi}{4}$ | $+\frac{\pi}{4}$ | $+\frac{\pi}{4}$ | $+\frac{\pi}{4}$ | $+\frac{\pi}{4}$ | $-\frac{\pi}{4}$ | $-\frac{\pi}{4}$ | $+\frac{\pi}{4}$ | $+\frac{\pi}{4}$ |

0 032 325

où a2 est le signal binaire modulant, b2 est le signal d'horloge, h2 le signal à la sortie du diviseur 21, e2 le signal de la sortie Q de la bascule 19, c2 le signal de sortie de la porte 17, d2 le signal de sortie de la porte 18, f2 le signal de la sortie de la bascule 22, k2 le signal de sortie de la porte 23, 12 le signal de sortie de la porte 24, m2 le signal de sortie de la porte 25, n2 le signal de sortie de la porte 27, i2 le signal de la sortie directe de la porte 26, et j2 le signal de la sortie directe de la porte 28.

Les courbes des Figs. 9A à 9I permettent également d'illustrer le fonctionnement du circuit de la Fig. 8. La Fig. 9A représente la forme d'onde du signal carré appliqué à l'entrée OL2, c'est à dire la porteuse non modulée. La Fig. 9B représente le signal à la sortie S2 quand on a $b2 = j2 = i2 = 0$; la Fig. 9C représente le signal à la sortie S2 quand on a $b2 = 1$ et $j2 = i2 = 0$; la Fig. 9D représente le même signal quand on a $b2 = 0$, $j2 = 1$ et $i2 = 0$; la Fig. 6E représente le même signal quand on a $b2 = j2 = 1$ et $i2 = 0$; la Fig. 9F représente le même signal quand on a $b2 = j2 = 0$ et $i2 = 1$; la Fig. 9G représente le même signal quand on a $b2 = 1$, $j2 = 0$ et $i2 = 1$; la Fig. 9H représente le même signal quand on a $b2 = 0$ et $j2 = i2 = 1$; et la Fig. 9I représente le même signal quand on a $b2 = j2 = i2 = 1$.

Il apparaît, à l'examen des courbes des Figs. 9B à 9I que chacune se déduit de la précédente par un retard ou déphasage de $+\pi/4$. Il est facile, en considérant chaque ensemble (b2, j2, i2) de conditions et le circuit de la Fig. 5 de vérifier ces courbes. Par ailleurs, on peut, dans le tableau IV, déduire de chaque ensemble (b2, j2, i2) à un instant donné la phase du signal de sortie S2, et donc la suite des phases, telle qu'elle est indiquée dans le tableau IV. Donc, on peut également en déduire la séquence des sauts de phase, en bas du tableau IV.

Il apparaît bien, en considérant la ligne a2 du tableau IV et celle des sauts de phase qu'un »1« est transmis par deux sauts de phase successifs de $+\pi/4$ et un »0« par deux sauts de phase successifs de $-\pi/4$, chaque saut élémentaire étant effectué dans la moitié d'une période d'élément binaire.

## Revendications

1. Modulateur pour modulation binaire à déplacement de phase à quatre états qui différent de $\pi/2$, dans laquelle le symbole binaire 1 est transmis par un saut de phase de $+\pi/2$ et le symbole binaire 0 est transmis par un saut de phase de $-\pi/2$, caractérisé en ce qu'il comprend une première porte OU exclusif (6) à une entrée de laquelle est appliqué le signal binaire modulant et dont la sortie est reliée à une entrée d'une seconde porte Ou exclusif (7) dont la sortie est reliée à l'entrée d'une bascule D (8) dont la sortie Q est reliée à la seconde entrée de la première porte OU exclusif (6), un diviseur par deux (9) à l'entrée duquel est appliqué le signal d'horloge au rythme du train du signal binaire modulant et dont la sortie inversée est reliée à la seconde entrée de la seconde porte OU exclusif (7), les sorties directe et inversée dudit diviseur par deux (9) étant respectivement reliées aux premières entrées d'une première (10) et d'une seconde (12) portes ET, les sorties Q et $\overline{Q}$ de la bascule D (8) étant respectivement reliées aux premières entrées d'une troisième (15) et d'une quatrième (14) portes ET, un circuit à retard de $\pi/2$ (11) à l'entrée duquel est appliqué le signal à la fréquence porteuse, qui est également appliqué à la seconde entrée de la seconde porte ET (12), la sortie du circuit à retard (11) étant reliée à la seconde entrée de la première porte ET (10), les sorties des première (10) et seconde (12) portes ET étant respectivement reliées aux entrées d'une porte Ou (13) comportant une sortie inversée reliée à la seconde entrée de la troisième porte ET (15) et une sortie directe reliée à la seconde entrée de la quatrième porte ET (14), les sorties des troisième (15) et quatrième (14) portes ET étant respectivement reliées aux entrées d'une porte OU simple (16) dont la sortie délivre le signal modulé.

2. Modulation binaire à déplacement de phase dans laquelle le symbole binaire 1 est transmis par un saut de phase de $+\pi/2$ et le symbole binaire 0 est transmis par un saut de phase de $-\pi/2$, ou vice versa, caractérisée en ce que chaque saut de phase est effectué en deux sauts de phase successifs de $\pi/4$, avec le signe correspondant, les sauts de phase successifs de $\pi/4$ étant effectués à un rythme double de débit numérique du signal binaire modulant.

3. Modulateur pour modulation suivant la revendication 2, caractérisé en ce qu'il comprend une première porte OU exclusif (17) à une entrée de laquelle est appliqué le signal binaire modulant et dont la sortie est reliée à une entrée d'une seconde porte Ou exclusif (18) dont la sortie est respectivement reliée aux entrées d'une première (19) et d'une seconde (22) bascule D, la sortie Q de la première bascule D (19) étant reliée, d'une part, à la seconde entrée de la première porte OU exclusif (17), d'autre part, à une entrée d'une première porte ET (23) et, enfin, à une entrée d'une troisième porte OU exclusif (27), la sortie Q de la seconde bascule D (22) étant reliée, d'une part, à l'entrée normale d'une seconde porte ET (24) et, d'autre part, à l'autre entrée de la troisième porte OU exclusif (27), une première porte OU (20) à sortie normale et à sortie inversée à l'entrée de la laquelle est appliqué un signal d'horloge au rythme du signal binaire modulant, la sortie normale de la première porte OU (20) étant reliée, d'une part, à l'entrée de validation de la première bascule D (19) et, d'autre part, à l'entrée d'un diviseur par deux (21) dont la sortie est reliée, d'une part, à l'autre entrée de la seconde porte OU exclusif (18) et, d'autre part, à une entrée d'une troisième porte ET (25) dont la seconde entrée est reliée à la sortie inversée de la première porte OU (20), la sortie inversée de la première porte OU (étant encore reliée d'une part, à l'entrée de validation de la seconde bascule D (22) et, d'autre part, à une entrée d'une quatrième porte ET (30), la sortie directe de la première porte OU (20) étant encore reliée à une entrée d'une cinquième porte ET (29), la seconde entrée de la quatrième porte ET (30) étant reliée à une entrée à laquelle est appliqué un signal carré constituant la porteuse non modulée, qui est également appliqué à l'entrée d'un premier circuit à retard (31) apportant un déphasage de $\pi/4$, dont la sortie est reliée à la seconde entrée de la cinquième porte ET (29), les sorties des quatrième (30) et cinquième (29) porte ET étant respectivement reliées aux entrées d'une seconde porte OU (32), les sortie des première (23) et seconde (24) portes ET étant respectivement reliées aux entrées d'une troisième porte OU (26) à sortie directe et sortie inversée, les sorties de la troisième porte ET (25) et de la troisième porte OU exclusif (27) étant respectivement reliées aux entrées d'une quatrième porte OU (28) à sortie directe et sortie inversée, la sortie de la seconde porte OU (32) étant relliée, d'une part, à l'entrée d'un second circuit à retard (33) apportant un déphasage de $\pi/2$ dont la sortie est reliée à une entrée d'une sixième porte ET (34) et, d'autre part, à une entrée d'une septième porte ET (35), la seconde entrée de la sixième porte ET (34) étant reliée à la sortie directe de la quatrième porte OU (28) et la seconde entrée de la septième porte ET (35) étant reliée à la sortie inversée de la quatrième porte OU (28), les sorties des sixième (34) et septième (35) portes ET étant respectivement reliées aux entrées d'une cinquième porte OU (36) à sortie directe et sortie inversée, dont la sortie inversée est reliée à une entrée d'une huitième porte ET (37) et la sortie directe est reliée à une entrée d'une neuvième porte ET (38), les secondes entrées des huitième (37) et neuvième (38) portes ET étant respectivement reliées aux sorties directe et inversée de la troisième porte OU (26), les sorties des huitième (37) et neuvième (38) portes ET étant respectivement reliées aux entrées d'une sixième porte Ou (39) dont la sortie délivre le signal modulé.

## Patentansprüche

1. Modulator für binäre Phasenverschiebungs-Modulation mit vier Phasenzuständen, die sich um $\pi/2$ unterscheiden, in dem das Binärsymbol »1« mit einer Phasenverschiebung $\pi/2$ und das Binärsymbol »0« mit einer Phasenverschiebung von $-\pi/2$ übertragen wird, dadurch gekennzeichnet, daß er enthält: ein erstes Exklusiv-ODER-Tor (6), von dem ein Eingang mit dem modulierenden binären Signal gespeist wird, und dessen Ausgang mit einem Eingang eines zweiten Exklusiv-ODER-Tors (7) verbunden ist, dessen Ausgang mit dem Eingang eines D-Flip-Flop (8) verbunden ist, dessen Ausgang Q mit dem zweiten Eingang des ersten Exklusiv-ODER-Tors (6) verbunden ist, eine Teile-durch-zwei-Schaltung (9), deren Eingang das Taktsignal im Rhythmus des modulierenden binären Signalzuges zugeführt wird, und deren invertierender Ausgang mit dem zweiten Eingang des zweiten Exklusiv-ODER-Tors (7) verbunden ist, wobei der direkte und der invertierende Ausgang der genannten Teile-durch-zwei-Schaltung (9) mit dem ersten Eingang eines ersten (10) bzw. eines zweiten (12) UND-Tors verbunden ist, wobei die Ausgänge Q und $\overline{Q}$ des D-Flip-Flop (8) mit dem ersten Eingang eines dritten (15) bzw. eines vierten (14) UND-Tors verbunden sind, eine Verzögerungsschaltung (11), die um $\pi/2$ verzögert, deren Eingang das Trägerfrequenz-Signal ebenso zugeführt wird wie dem zweiten Eingang des zweiten UND-Tors (12), wobei der Ausgang der Verzögerungsschaltung (11) mit dem zweiten Eingang des ersten UND-Tors (10) verbunden ist, wobei die Ausgänge des ersten (10) und zweiten (12) UND-Tors entsprechend mit den Eingängen eines ODER-Tors (13) verbunden sind, dessen invertierender Ausgang mit dem zweiten Eingang des dritten UND-Tors (15), und dessen direkter Ausgang mit dem zweiten Eingang des vierten UND-Tors (14) verbunden ist, wobei die Ausgänge des dritten (15) und vierten (14) UND-Tors entsprechend mit den Eingängen eines einfachen ODER-Tors (16) verbunden sind, dessen Ausgang das modulierte Signal liefert.

2. Binäre Phasenverschiebungs-Modulation, bei der das binäre Symbol »1« mit einer Phasenverschiebung von $\pi/2$ und das binäre Symbol »0« mit einer Phasenverschiebung von $-\pi/2$ übertragen wird, oder umgekehrt, dadurch gekennzeichnet, daß jede Phasenverschiebung durch zwei Phasenverschiebungen von $\pi/4$ bewirkt wird, zusammen mit dem entsprechenden Vorzeichen, wobei die Phasenverschiebungen von $\pi/4$ mit einer doppelt so großen Rate erzeugt werden wie die digitale Rate des modulierenden binären Signals.

3. Modulator für eine Modulation nach Anspruch 2, dadurch gekenzeichnet, daß dieser enthält: ein erstes Exklusiv-ODER-Tor (17) mit einem Eingang, dem das modulierende binäre Signal zugeführt wird, und dessen Ausgang mit einem Eingang eines zweiten Exklusiv-ODER-Tors (18) verbunden ist, dessen Ausgang mit dem Eingang eines ersten D-Flip-Flop (19) und dem Eingang eines zweiten D-Flip-Flop (22) verbunden ist, wobei der Ausgang Q des ersten D-Flip-Flop (19) einerseits mit dem zweiten Eingang des ersten Exklusiv-ODER-Tors (17), andererseits mit einem Eingang eines ersten UND-Tors (23) und schließlich mit einem Eingang eines dritten Exklusiv-ODER-Tors (27) verbunden ist, wobei der Ausgang Q des zweiten D-Flip-Flop (22) einerseits mit dem normalen Eingang eines zweiten UND-Tors (24) und andererseits mit dem anderen Eingang des dritten Exklusiv-ODER-Tors (27) verbunden ist, ein erstes ODER-Tor (20) mit einem normalen Ausgang, einem invertierenden Ausgang und einem Eingang, dem ein Taktsignal mit dem Rhythmus des modulierenden binären Signals zugeführt wird, wobei der normale Ausgang des ersten ODER-Tors (20) einerseits mit dem Auslöse-Eingang des ersten D-Flip-Flop (19) und andererseits mit dem Eingang einer Teile-durch-zwei-Schaltung (21) verbunden ist, deren Ausgang einerseits mit dem anderen Eingang des zweiten Exklusiv-ODER-Tors (18) und andererseits mit einem Eingang eines dritten UND-Tors (25) verbunden ist, dessen zweiter Eingang mit dem invertierenden Ausgang des ersten ODER-Tors (20) verbunden ist, wobei der invertierende Ausgang des ersten ODER-Tors (20) ferner einerseits mit dem Auslöse Eingang des zweiten D-Flip-Flop (22) und andererseits mit einem Eingang eines vierten UND-Tors (30) verbunden ist, wobei der direkte Ausgang des ersten ODER-Tors (20) ferner mit einem Eingang eines fünften UND-Tors (29) verbunden ist, wobei der zweite Eingang des vierten UND-Tors (30) mit einem Eingang verbunden ist, dem ein Rechteck-Signal zugeführt wird, das den nicht modulierten Träger bildet, und das ferner dem Eingang einer ersten Verzögerungsschaltung (31) zugeführt, die eine Phasenverschiebung um $\pi/4$ bewirkt, deren Ausgang mit dem zweiten Eingang des fünften UND-Tors (29) verbunden ist, wobei die Ausgänge des vierten (30) und fünften (29) UND-Tors entsprechend mit den Eingängen eines zweiten ODER-Tors (32) und die Ausgänge des ersten (23) und zweiten (24) UND-Tors entsprechend mit den Eingängen eines dritten ODER-Tors (26), das einen direkten und einen invertierenden Ausgang besitzt, verbunden sind, wobei die Ausgänge des dritten UND-Tors (25) und des dritten Exklusiv-ODER-Tors (27) entsprechend mit den Eingängen eines vierten ODER-Tors (28) verbunden sind, das einen direkten und einen invertierenden Ausgang besitzt, wobei der Ausgang des zweiten ODER-Tors (32) einerseits mit dem Eingang einer zweiten Verzögerungsschaltung (33), die eine Phasenverschiebung von $\pi/2$ bewirkt, und deren Ausgang mit einem Eingang eines sechsten UND-Tors (34) verbunden ist, und andererseits mit einem Eingang eines siebten UND-Tors (35) verbunden ist, wobei der zweite Eingang des sechsten UND-Tors (34) mit dem direkten Ausgang des vierten ODER-Tors (28) und der zweite Eingang des siebten UND-Tors (35) mit dem invertierenden Ausgang des vierten ODER-Tors (28) verbunden sind, wobei die Ausgänge des sechsten, (34) und siebten (35) UND-Tors entsprechend mit den Eingängen eines fünften ODER-Tors (26), das einen direkten und einen invertierenden Ausgang besitzt, verbunden sind, dessen invertierender Ausgang mit einem Eingang eines achten UND-Tors (37), und dessen direkter Ausgang mit einem Eingang eines neunten UND-Tors (38) verbunden ist, wobei der zweite Eingang des achten (37) und der zweite Eingang des neunten (38) UND-Tors mit dem direkten bzw. dem invertierenden Ausgang des vierten ODER-Tors (26) verbunden sind, und wobei die Ausgänge des achten (37) und neunten (38) UND-Tors entsprechend mit den Eingängen eines siebten ODER-Tors (39) verbunden sind, dessen Ausgang das modulierte Signal liefert.

## Claims

1. A modulator for a binary phase shift modulation having four phase states spaced by $\pi/2$, in which a bit »1« is transmitted by a phase shift of $+\pi/2$ and a bit »0« by a phase shift of $-\pi/2$, characterized in that it comprises a first exclusive OR gate (6) having one input which the modulating binary signal is applied to and an output which is connected to one input of a second exclusive OR gate (7) the output of which ist connected to the input of a D flip-flop (8) the output Q of which is connected to the second input of the first exclusive OR gate (6), a divide-by-two unit (9) having ist input which the clock signal at the modulating binary signal bit rate is applied to and its complement output which is connected to the second input of the second exclusive OR gate (7), the true and complement outputs of said divide-by-two unit (9) being respectively connected to the first inputs of a first (10) and a second (12) AND gate, the outputs Q and $\overline{Q}$ of the D flip-flop (8) being respectively connected to the first inputs of a third (15) and a fourth (14) AND gate, a delay circuit (11) delaying by $\pi/2$ having its input which the carrier frequency signal is applied to, as well as to the second input of the second AND gate (12), the output of the delay circuit (11) being connected to the second input of the first AND gate (10), the outputs of the first (10) and second (12) AND gates being respectively connected to the inputs of an OR gate (13) having an complement output connected to the second input of the third AND gate (15) and a true output connected to the second input of the fourth AND gate (14), the outputs of the third (15) and fourth (14) AND gates being respectively connected to the inputs of a simple OR gate (16) the output of which provides the modulated signal.

2. A binary phase shift modulation in which the bit »1« is transmitted by a phase shift of $+\pi/2$ and the bit »0« by a phase shift of $-\pi/2$, or conversely, characterized in that each phase shift is performed by two successive phase shifts of $\pi/4$ together with the corresponding sign, the successive phase shifts of $\pi/4$ being performed at a rate which is twice the digital rate of the modulating binary signal.

3. A modulator for a modulation according to claim 2, characterized in that it comprises a first exclusive OR gate (17) having an input which the modulating binary signal is applied to and an output which is connected to an input of a second exlusive OR gate (18), the output of which is respectively connected to the inputs of a first (19) and a second (22) D flip-flop, the output Q of the first D flip-flop (19) being connected, on the on hand, to the second input of the first exclusive OR gate (17), on the other hand, to an input of a first AND gate (23) and, finally, to an input of a third exclusive OR gate (27), the output Q of the second D flip-flop (22) being connected, on the one hand, to the true input of a second AND gate (24) and, on the other hand, to the other input of the third exclusive OR gate (27), a first OR gate (20) with a true output, a complement output and an input which the clock signal at the modulating binary signal rate is applied to, the true output of the first OR gate (20) being connected, on the one hand, to the enable input of the first D flip-flop (19) and, on the other hand, to the input of a divide-by-two unit (21) the output of which is connected, on the one hand, to the other input of the second exclusive OR gate (18) and, on the other hand, to an input of a third AND gate (25) the second input of which is connected from the complement output of the first OR gate (20), the complement output of the first OR gate (20), the complement output of the first OR gate (20) being further connected, on the one hand, to the enable input of the second D flip-flop (22) and, on the other hand, to an input of a fourth AND gate (30), the true output of the first OR gate (20) being further connected to an input of a fifth AND gate (29), the second input of the fourth AND gate (30) being connected to an input to which is applied a square wave signal constituting the non-modulated carrier which is further applied to the input of a first delay circuit (31) causing a phase shift of $\pi/4$, the output of which is connected to the second input of the fifth AND gate (29) the outputs of the fourth (30) and fifth (29) AND gates being respectively connected to the inputs of a seccond OR gate (32), the outputs of the first (23) and second (24) AND gates being respectively connected to the inputs of a third OR gate (26) with a true output and a complement output, the outputs of the third AND gate (25) an the third exclusive OR gate (27) being respectively connected to the inputs of a fourth OR gate (28) with a true output and a complement output, the output of the second OR gate (32) being connected, on the one hand, to the input of a second delay circuit (33) causing a phase shift of $\pi/2$ the output of which is connected to an input of a sixth AND gate (34) and, on the other hand, to an input of a seventh AND gate (35), the second input of the sixth AND gate (34) being connected from the true output of the fourth OR gate (28) and the second input of the seventh AND gate (35) being connected from the complement output of the fourth OR gate (28), the outputs of the sixth (34) and seventh (35) AND gates being respectively connected to the inputs of a fifth OR gate (36) with a true output and a complement output, the complement output being connected to an input of an eighth AND gate (37) and the direct output to an input of a ninth AND gate (38), the second inputs of the eighth (37) and ninth (38) AND gate being respectively connected from the true and complement outputs of the third OR gate (26), the outputs of the eighth (37) and ninth (38) AND gates being respectively connected to the inputs of a sixth OR gate (39) the output of which provides the modulated signal.

## FIG.1a

Porte ET

## FIG.1b

Porte OU

## FIG.1c

Porte OU exclusif

## FIG.1d

Porte OU exclusif
à sortie inversée

## FIG.1e

Porte OU à sortie normale
et sortie inversée (○—)

## FIG.1f

Porte ET à entrée normale
et entrée inversée (○)

## FIG.1g

Bascule D

## FIG.1h

÷2

Diviseur par 2

## FIG.1i

$\dfrac{\pi}{2}$

Déphasage de $\pi/2$
(ligne à retard)

## FIG.2

Signal reçu

1

2 ⊗

5 ECHANTILLONNAGE
PRISE DE DECISION

3 RETARD T

4 DEPHASAGE
$\Delta\phi$

FIG.3

FIG.4

FIG.7

0 032 325

15

# FIG.5

# FIG.6

0 032 325

# FIG.8

# FIG.9